# EUROPEAN PATENT SPECIFICATION

(11) **EP 2 871 147 B1**
(45) Date of publication and mention of the grant of the patent: **23.08.2017**
(21) Application number: 14191517.3
(22) Date of filing: 03.11.2014
(51) Int. Cl.: B66B 11/00, H02K 5/06, H02K 5/04, H02K 5/00, H02K 7/14

(54) **Elevator with tubular motor and divided motor mount**
Aufzug mit Rohrmotor und geteilter Motorhalterung
Ascenseur doté de moteur tubulaire et montage de moteur divisé

(30) Priority: 07.11.2013 DE 202013105006 U
(43) Date of publication of application: 13.05.2015
(73) Proprietor: Wittur Holding GmbH, 85259 Wiedenzhausen (DE)
(72) Inventor: Geßner, Ralf, 01239 Dresden (DE); Thomas, Norbert, 01307 Dresden (DE)
(74) Representative: Misselhorn, Hein-Martin

(56) References cited:
- KR-B1- 101 211 638
- US-A- 2 756 953
- US-B1- 6 488 124

## Description

The invention relates to an elevator according to the preamble to claim 1.

The invention can be used equally for passenger elevators and for freight elevators. The term elevator is understood here to generally be a vertical elevator, i.e. an elevator that has an elevator car that is usually guided on car rails and is moved up and down in the vertical direction. The elevator car is suspended by one or usually several parallel support cables that travel over a drive pulley and in this way, raise and lower the elevator car. Usually a counterweight is provided, which is fastened to the other end of the support cable(s) traveling over the drive pulley.

A wide variety of elevator drive units for drive pulley elevators are known.

Since in recent times, almost exclusively so-called machine room-free elevators are being constructed, the elevator drives are as a rule embodied so that the drive pulley is mounted in floating fashion, i.e. is mounted on a shaft that is only supported on one side of the drive pulley. In this way, the drive can be laterally positioned inside the elevator shaft, in a niche in a shaft wall, or in a laterally adjacent position close to the elevator shaft and the drive pulley protrudes into the elevator shaft with the aid of the drive unit shaft end, which is embodied with a corresponding length.

As a result, the elevator drive is subjected to a relatively powerful tilting moment in the direction oriented into the elevator shaft and therefore must have a correspondingly massive housing that is securely mounted to the building. Only in this way can the powerful transverse forces acting on the drive shaft via the drive pulley be absorbed by the drive unit.

Because of this, the motor housings are inevitably embodied as correspondingly massive and therefore heavy and bulky.

An elevator drive with such a housing is known from US 6,488,124 B1.

Logically, the same applies to elevators that are designed for installation in a separate machine room, many of which are elevators for heavy loads.

From US 2,756,953 a mounting rack for electric motors like a fan motor is known.

This causes problems, particularly with modernization.

Whereas with new construction, the elevator drive can be advantageously lowered into the building from above with the aid of a crane before completion of the roof, with modernization, the elevator drive must in many cases be brought through the building to its installation site, which is usually in the vicinity of the shaft head. In this context, both the dead weight of the elevator drives and their bulky dimensions have turned out to be disadvantageous and in modernization work, often requires the demolition of existing door frames in order to make enough room for the elevator drive to pass through.

In order to solve this problem, the elevator drive according to the invention is embodied in accordance with claim 1.

Because the drive unit support has a partial annular casing, against which the drive unit generally rests with its entire surface or with a large part of its surface and which encloses the drive unit from underneath up to the vicinity of its sides, and the drive unit also has a holding element, which encloses the drive unit from above and which is usually a component that can be detached from the rest of the drive unit support, the drive unit can on the one hand reliably retain its proper position in the shaft even under the influence of powerful transverse forces acting on the drive pulley. On the other hand, the drive unit and the drive unit support are separate parts that can be detached from each other for transport purposes and transported separately from each other. In this connection, the drive unit support and the drive unit are designed so that the drive unit support can be detached from the drive unit without having to open the dirt-sensitive interior of the drive unit, i.e. the drive unit support is not a component of the housing that protects the drive unit from the surroundings, but is instead embodied separate from it.

In this case, according to the invention, the housing that protects the drive unit from the surroundings can as such be embodied as comparatively light-weight since when installation of the drive unit is complete, it is embraced by the drive unit support essentially over its entire area, and is thus stabilized despite its own reduced stability - by comparison with a drive unit housing that is merely provided with unscrewable feet on the bottom and therefore must execute the entire load transmission essentially via the drive unit housing, which is itself embodied as correspondingly massive.

Since, the partial annular casing serving as a support for the drive unit and the holding element that cooperates with it can be detached from each other for transport purposes, not only can the drive unit be more easily brought through the building to its installation site, but also the remaining drive unit support can be better transported and handled. The holding element, which pushes the drive unit into the underlying partial annular casing, is embodied in the form of a partial annular casing. Preferably, this partial annular casing is also essentially inherently rigid.

In this way, the motor is enclosed or embraced in an essentially rigid fashion along all sides of its outer circumference and as a result, is held in its place in a particularly secure fashion.

The respective partial annular casing is advantageously embodied as thick-walled and is composed of steel or cast iron. It has turned out to be advantageous if the respective partial annular casing has a wall thickness W throughout of ≥ 12 mm or better still w ≥ 20 mm.

The respective partial annular casing advantageously has at least one - better still two - laterally protruding flanges. These flanges are used to connect the partial annular casing to the holding element and/or to the other partial annular casing so that the drive unit is securely encompassed at its outer circumference.

In this case, the partial annular casing and the associated holding element and/or the plurality of partial annular casings are advantageously clamped against the circumference of the drive unit enclosed by them so that a nonpositive, frictional engagement is produced between the circumference of the drive unit and the inner surface of the partial annular casings. This nonpositive, frictional engagement transmits a significant part - and preferably the preponderance - of the torque produced during operation from the drive unit to the drive unit support. Specifically for such a support of the drive unit with the aid of partial annular casings, it is advantageous to embody the drive unit as "gearless," i.e. transmissionless. This is because a transmission would unnecessarily increase amount of space that has to be enclosed by the partial annular casings.

In addition, a transmission would increase the weight of the drive unit by a not insignificant amount and as a result, would work against the advantage that the invention is intended to achieve, namely that the drive unit and its holder are composed of a plurality of separate parts, each of which by itself does not weigh much and therefore can be conveniently brought to its place through the building.

Preferably, the drive unit has a drive unit housing whose circumference surface predominantly constitutes a tube section that is intrinsically closed in the circumference direction and whose outer contour is complementary to the inner contour of the partial annular casing or casings.

In this case, it is particularly advantageous if the tubular section is preferably embodied as smooth-surfaced throughout.

This tubular section is embodied so that it essentially does not deform on its inside due to the influence of forces that are produced between it and the partial annular casings and for this reason, the forces exerted by the partial annular casings do not have any negative influence on the precision of the bearing of the motor shaft and/or on the air gap of the motor.

This tubular section thus constitutes a fixed housing region via which powerful forces can be transmitted between it and the partial annular casings.

Preferably, the tubular section permits powerful enough forces to be transmitted between itself and the partial annular casings that the tubular section is secured to the partial annular casings essentially or at least predominantly by nonpositive, frictional engagement. This prevents the drive unit housing, under the influence of the reaction moment of the moment occurring at the drive pulley, from rotating around itself due to slippage of the tubular section between the partial annular casings.

It is particularly advantageous if the wall thickness W of the tubular section (essentially all throughout) is greater than 12 mm or better still, is at least 20 mm.

Ideally, the tubular section is composed of steel or cast iron.

The tubular section itself advantageously has at least one hole into which a screw is inserted that protrudes into the partial annular casing or a pin that protrudes into the partial annular casing, thus producing a means for preventing rotation. Naturally, it is particularly advantageous to provide a plurality of such screws and/or pins and a corresponding number of holes in the tubular section.

It is also particularly advantageous to embody the tubular section as entirely smooth-surfaced and ideally with a circular cylindrical surface.

In a modification of this invention, the tubular section is rimmed on at least one end, preferably on both ends, with a holding projection that protrudes radially outward. Such a holding projection contributes to preventing the drive unit from being displaced in the direction of the drive unit longitudinal axis L relative to the partial annular casings. In addition, such a holding projection, particularly if it is advantageously embodied in the form of an annular flange that is closed in the circumference direction, offers the possibility of additionally screwing the tubular section to the drive unit support top part or drive unit support bottom part, thus achieving additional strength. According to the invention, the partial annular casing or casings and the tubular section of the drive unit match to each other so that the partial annular casings rest against the tubular section essentially along their entire inner surface so that the waste heat of the drive unit generated during operation is conveyed directly from the housing of the drive unit into the partial annular casing or casings.

Finally, it should once again be noted that it is particularly advantageous if one of the partial annular casings is provided with a pedestal in order to ensure a secure setup and mounting of the partial annular casing on the roof, on a balcony, or on a comparable shaft platform that is provided for setting up the drive unit. This forms a cradle of sorts into which the drive unit can be placed during installation, in order to then be able to place the top partial annular casing - or the holding shells or holding cables that replace it - onto the drive unit and then to screw or lash it in place, thus securing the drive unit in its final position. The parting line between the lower and upper partial annular casings then extends essentially in the horizontal direction.

It is not, for all practical intents and purposes, absolutely necessary for the parting line between the partial annular casings to be oriented in a horizontal direction.

Other possible embodiments, effects, and advantages ensue from the explanations of the exemplary embodiment taken in conjunction with the drawings.
- Fig. 1: shows the drive unit and the drive unit support of the elevator according to the invention in the completely assembled state, but without a drive pulley.

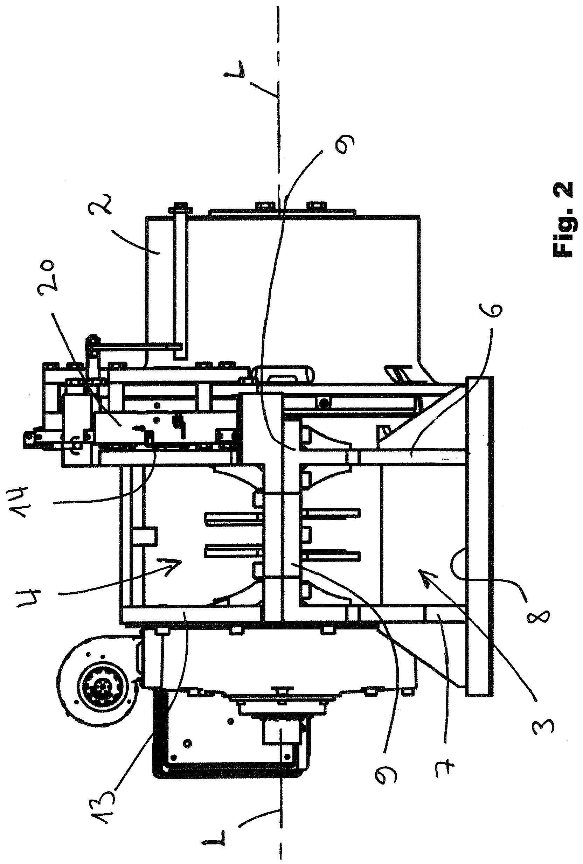

- Fig. 2: shows a side view of the drive unit shown in Fig. 1, with a drive pulley and brake installed.
- Fig. 3: shows a central longitudinal section through the drive unit shown in Fig. 2, with the drive pulley removed and without a drive unit support.
- Fig. 4: shows a drive unit support bottom part from its back side oriented away from the side of the drive pulley.
- Fig. 5: shows a drive unit support bottom part from its front side oriented toward the side of the drive pulley.
- Fig. 6: shows the drive unit support bottom part according to Figs. 4 and 5, viewed from above.
- Fig. 7: shows the drive unit support bottom part according to Figs. 4, 5, and 6, viewed from the side.
- Fig. 8: shows a drive unit support top part, viewed from its back side oriented away from the side of the drive pulley.
- Fig. 9: shows the drive unit support top part according to Fig. 8, viewed from above.
- Fig. 10: shows the drive unit support top part according to Figs. 8 and 9, viewed from the side.
- Fig. 11: shows a drive unit support top part according to Figs. 8 through 10, viewed from its front side oriented toward the side of the drive pulley.

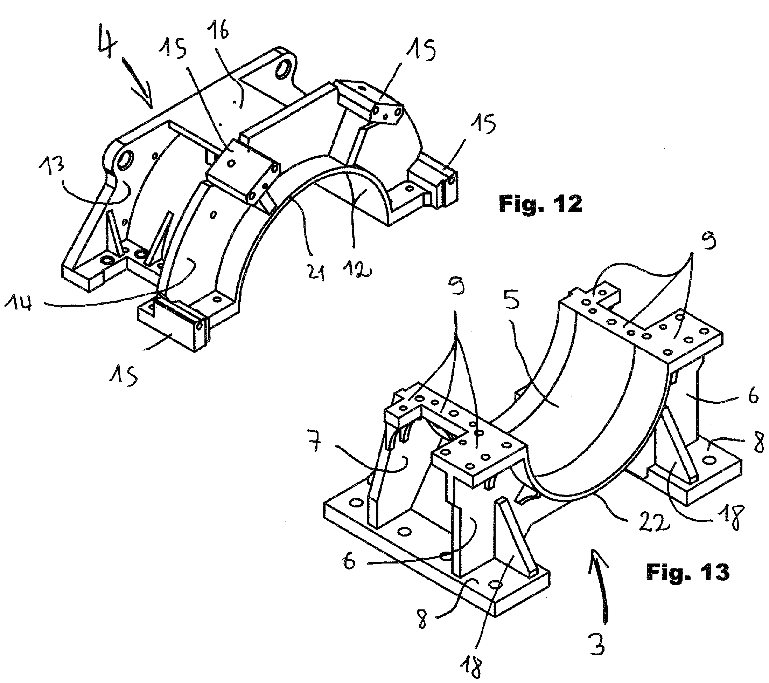

- Fig. 12: shows a detailed, enlarged depiction of a drive unit support top part of the drive unit according to the invention shown in Fig. 1, but otherwise corresponds to Figs. 8 through 11.
- Fig. 13: shows a detailed, enlarged depiction of a bottom part of a drive unit support of the drive unit according to the invention shown in Fig. 1, but otherwise corresponds to Figs. 4 through 7.
- Fig. 14: is an exploded view that illustrates how the drive unit, which is shown with the drive pulley removed, is accommodated between the partial annular casings of the drive unit support bottom part and of the drive unit support top part.

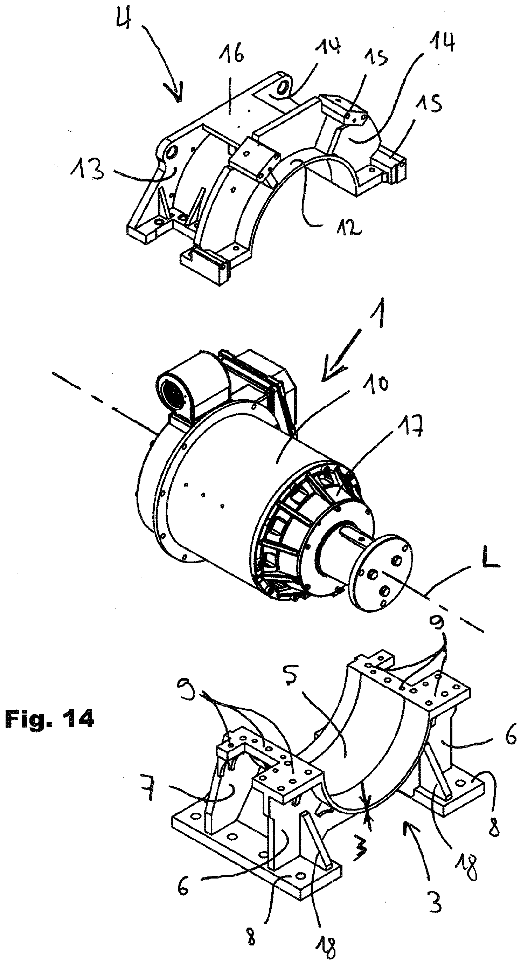

The exemplary embodiment according to the invention is very easy to comprehend when explained in conjunction with Fig. 14.

Fig. 14 shows an overview of how the drive unit 1 of the elevator according to the invention is held by a drive unit support, which is composed of a drive unit support bottom part 3 and a drive unit support top part 4.

The drive unit support bottom part 3 is in turn essentially composed of a partial annular casing 5. The partial annular casing 5 serves as a support for the drive unit 1. It embraces the circumference of the drive unit from beneath. For this is purpose, the partial annular casing 5 is embodied as a section of a hollow cylinder. In relation to the central longitudinal axis L of the drive unit, it embraces the drive unit from beneath over an angle α of approximately 175°. In general, it can be said that the bottom partial annular casing should embrace the drive unit by at least 120° or better still by at least 140° to a maximum of 180°. The drive unit then lies in this partial annular casing 5 as in a cradle, see Fig. 14. The partial annular casing could theoretically also be embodied in the form of a many-cornered hollow polygon, e.g. a 12-cornered shape. The hollow cylindrical form, however, is clearly preferable.

The partial annular casing 5 advantageously has a wall thickness W of at least 12 mm and better still at least 20 mm, see Fig. 14.

It is preferably composed of a steel plate, or alternatively of cast iron, that is deformed to transform it into a section of a hollow cylinder. The partial annular casing is an essential component of the drive unit support bottom part, but preferably does not compose the latter all by itself.

Instead, the partial annular casing of the drive unit support bottom part 3 is held on its outer circumference by a first support plate 6 and a second support plate 7. These two support plates are preferably oriented essentially in the vertical direction. The support plates have an opening that is adapted to the contour that the partial annular casing has on its outer circumference so that the two support plates 6 and 7 embrace the partial annular casing on its outer circumference in a snug fashion and preferably, rest against it in an essentially continuous fashion. The partial annular casing 5 is advantageously made of steel or weldable cast steel and is then welded to the two support plates 6 and 7, which particularly in such a case, are likewise made of such a material.

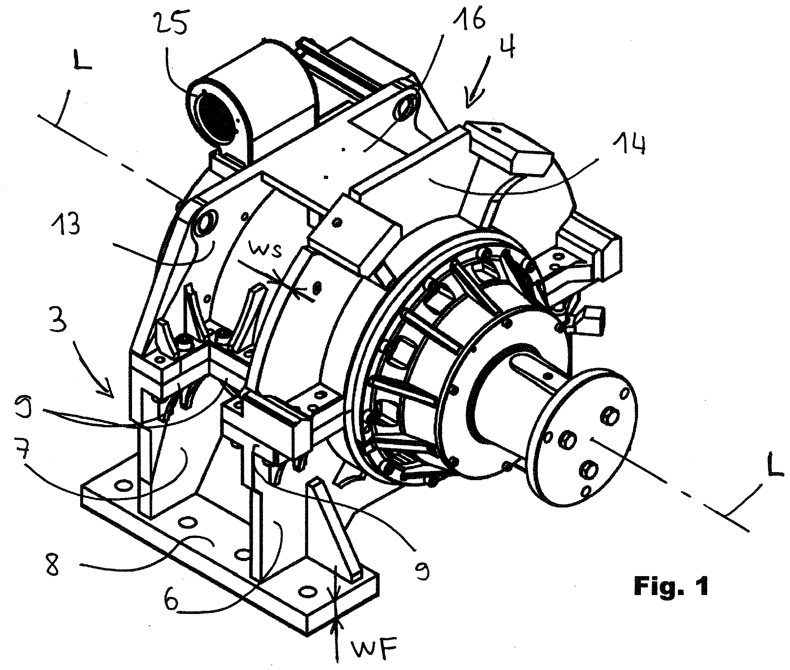

The two support plates 6 and 7 preferably have a thickness WS (see Fig. 1) of at least 18 mm or better still at least 22 mm.

In the vicinity of both of their ends, the two support plates 6 and 7 each rest on a respective base plate 8 auf. Each of the base plates 8 preferably has a plurality of through holes via which the two base plates - with the aid of corresponding anchors or mollies and screws - can be mounted to the building. Each of the base plates advantageously has a wall thickness WF (see Fig. 1) perpendicular to its surface, which is essentially continuously greater than the correspondingly measured wall thickness of the partial annular casings and their support plates. Preferably, this wall thickness is at least 30 mm or better still at least 40 mm.

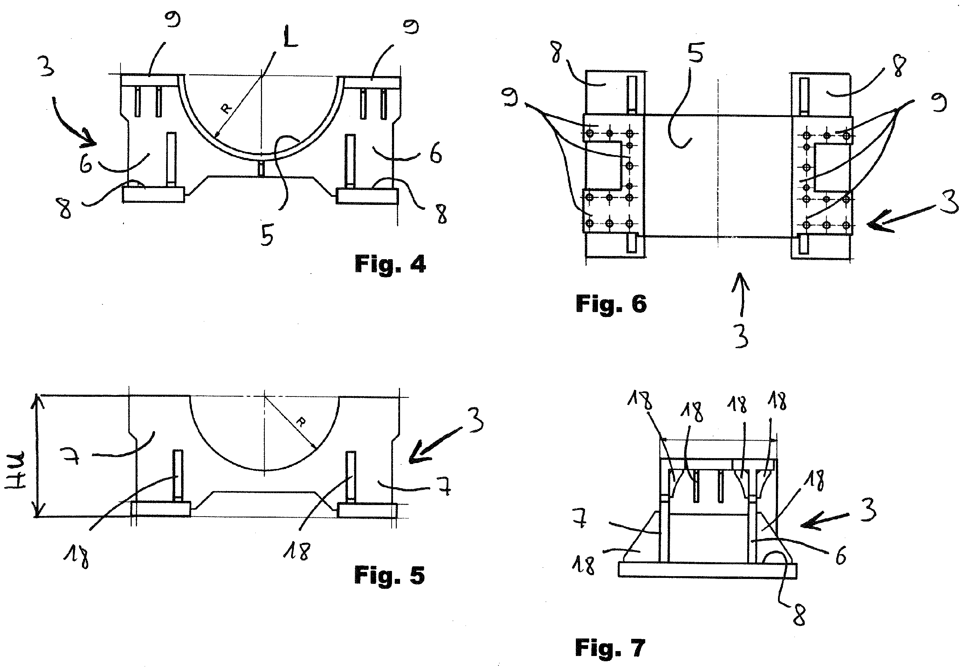

The base plates are preferably positioned relative to the partial annular casing or casings so that each of them protrudes beyond the partial annular casing on at least two sides, which significantly increases the stability of the design, see Fig. 6 for example.

Preferably, additional reinforcing elements are provided, for example the triangular reinforcing elements 18, which are each mounted on the two outsides of the base plates, and/or the obliquely extending plates that are also not shown in detail and that are provided and welded between two base plates in order to support them relative to each other and relative to the partial annular casing 5.

As a rule, the maximum height HU of the drive unit support bottom part 3 is greater than 300 mm, in this case in the vicinity of 500 mm, see Fig. 5.

It should also be noted that manufacturing the partial annular casing out of cast iron in larger production runs permits a particularly efficient manufacture, especially if the partial annular casing becomes an integral component of a drive unit support bottom part that is cast in one piece.

The drive unit support top part 4 is preferably constructed in a similar fashion.

The drive unit support top part 4 is then also essentially composed of a partial annular casing 12, which is provided with a first reinforcing plate 13 and a second reinforcing plate 14. The two above-mentioned reinforcing plates 13 and 14 are preferably likewise oriented in an essentially vertical direction. These two reinforcing plates 13 and 14 also each have an opening that is adapted to the outer circumference contour of the partial annular casing 12 so that the reinforcing plates 13 and 14 rest against the outer circumference of the partial annular casing 12 in a snug, preferably essentially continuous fashion. Here, too, the connection is most often produced by means of welding and the statements made above about material are correspondingly applicable here, as well. Preferably, the reinforcing plates 13 and 14 are not the same size; instead, the reinforcing plate that is provided on the side oriented directly toward the drive pulley is larger. It is likewise advantageous if one of the two reinforcing plates - ideally the one oriented away from the drive pulley - has jacking points or cable eyes for engagement by a hoisting machine.

Statements made above with regard to the corresponding components of the drive unit support bottom part correspondingly apply to the dimensions preferably used for the partial annular casing 12 and reinforcing plates 13, 14. As a rule, the maximum height HO of the drive unit support top part 4 is greater than 300 mm, in this case in the vicinity of 530 mm, see Fig. 5.

As a rule, the first and second support plates 6 and 7 as well as the two reinforcing plates 13 and 14 in particular have the function of increasing the bending strength of the partial annular casing with which they are associated, i.e. making it more rigid, so that the influence of the bending that is caused by the cable loads exerted on the drive pulley, which is supported in floating fashion, do not impermissibly deform the partial annular casings 5 and 12, but instead, it is possible to produce sufficiently high clamping forces thanks to the screw mounting of the flanges 9.

It is also noteworthy that the second reinforcing plate of the drive unit support top part is provided with brake holders 15, which in this case are embodied in the form of plates that protrude in a direction essentially parallel to the drive unit longitudinal axis L.

It is also advantageous if a plateau 16 is provided on the outer circumference of the partial annular casing 12, between the first reinforcing plate 13 and the second reinforcing plate 14, and this plateau is used for supporting a terminal box and possibly also for fastening brake cabling.

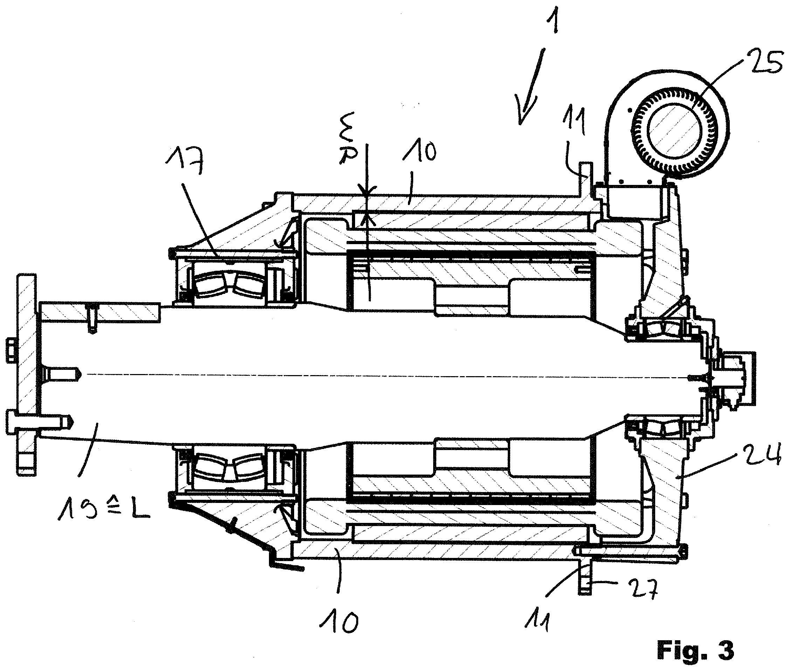

Fig. 3, which illustrates the drive unit in detail, clearly shows the following:
The elevator drive unit 1 is preferably embodied as "gearless." It is therefore essentially composed of an electric motor, which is accommodated in a drive unit housing. The output shaft 19 protrudes out from the drive unit housing on the one side. The output shaft 19 is connected to the drive pulley 2, usually with the aid of a feather key, as shown in Fig. 1.

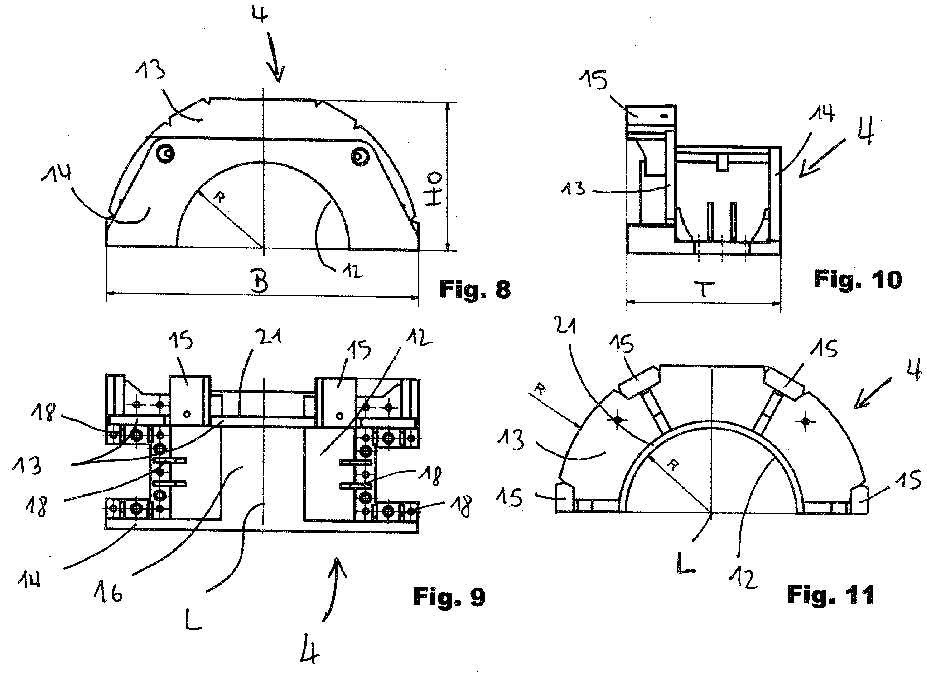

The circumference of the drive unit housing is predominantly composed of a tubular section 10. The tubular section 10 in this case is embodied as smooth-surfaced on its outer circumference. As a rule, it is embodied in the form of a pipe that is preferably intrinsically closed in the circumference direction. The outer radius of the tubular section is generally between 250 mm and 450 mm and the inner diameter or curvature radius R of the partial annular casings is correspondingly adapted, e.g. see Figs. 5 and 8.

This tubular section 10 is embodied as thick-walled and in the radial direction, has a wall thickness W that is at least 10 mm. In this way, the tubular section 10 can be acted on with relatively high forces in the radial direction without significantly deforming, in the sense of disadvantageously influencing the motor situated inside, e.g. in that the bearings are disadvantageously stressed or the air gap is negatively affected. The diameter of the motor shaft or output shaft 19 has multiple steps and decreases incrementally from the end oriented toward the drive pulley to the end oriented away from the drive pulley. On its side oriented toward the drive pulley, a large bearing plate 17 is detachably flange-mounted directly to the tubular section 10. This large bearing plate 17 holds a roller bearing, preferably embodied in the form of a spherical roller bearing, between the tubular section 10 (and outside of the tubular section 10) and the drive pulley. On its side oriented away from the drive pulley, a small bearing plate 24 is flange-mounted directly to the tubular section. This large bearing plate 17 holds a roller bearing, preferably also embodied in the form of a spherical roller bearing, outside and behind the tubular section.

In connection with the invention, it is particularly noteworthy that the drive unit is equipped with a fan 25 that drives a cooling air flow through the motor, see Fig. 3. This compensates for the fact that the heat dissipation via the tubular section 10 is less than optimal because it is embraced over its entire area by the partial annular casings 5 and 12, which is why the tubular section 10 cannot be equipped with cooling fins that improve the convective cooling and also cannot be even indirectly swept from the outside by the ambient air.

The outer circumference surface of the tubular section 10 and the inward-facing circumference surfaces of the partial annular casings 5 and 12 are matched to each other so that the two partial annular casings 5 and 12 each rest with the preponderance of their area or even essentially their entire area against the outer circumference surface of the tubular section 10. In this regard, it should be noted that the inner surface of a partial annular casing, optionally in the vicinity of the "neutral fiber" (with regard to the bending around the output shaft 19), i.e. in the middle region, can have an indentation or recess so that it does not locally rest against the tubular section 10 there. This then permits a more efficient production since the machining of the inner surface of the partial annular casings, which machining entails comparatively strict tolerances, only has to be performed in places where the partial annular casing contributes significantly to the load transmission.

In this way, the tubular section is secured between the two partial annular casings 5 and 12 by means of nonpositive, frictional engagement. This means that at least a significant part of the reaction moment that occurs during operation, which counteracts the moment that is exerted by the drive pulley, can be transmitted from the tubular section 10 to the drive unit support or its bottom part 3 and its bottom part 4 by means of nonpositive, frictional engagement.

The tubular section 10 and the partial annular casings 5 and 12 are advantageously embodied and matched to each other so that the predominant part of the reaction moment can thus be transmitted by means of nonpositive, frictional engagement.

In some cases, it is advantageous to optionally provide an additional means for preventing rotation.

It is particularly advantageous to embody such a means for preventing rotation in that at least one of the two partial annular casings has at least one radially extending through hole through which a screw is inserted, which is screwed into a thread of the thick-walled tubular section 10. Usually, not just one such screw, but several screws are provided. Alternatively, it is just as possible to provide a pinning, for example in the form of at least one grooved pin, which is slid through a diametrically adapted through bore of at least one partial annular casing and engages in a corresponding blind hole bore of the thick-walled tubular section 10. The above-mentioned screw connection in this case has the advantage that it is more easily disengaged in the event of a removal of the motor for maintenance work. It is more laborious to pull a pin.

It is also evident in Fig. 3 that preferably, the tubular section 10 itself is equipped with at least one holding projection 11 protruding at least essentially in the radial direction. The holding projection is preferably embodied in the form of an annulus that is intrinsically closed in the circumference direction. As a rule, it in turn has a plurality of through holes 27 for (preferably) screw-mounting or possibly pin-mounting it to a corresponding end surface 21, 22 of the partial annular casings. This makes it possible to provide an additional positive, form-fitting and/or nonpositive, frictional securing of the tubular section 10, which preferably additionally contributes to the reliable avoidance of slippage of the tubular section relative to the partial annular casings 5, 12.

In order to be able to correspondingly connect or clamp the two partial annular casings 5 and 12 to each other, each of the partial annular casings 5, 12 is equipped with flanges 9 that protrude outward essentially in the radial direction at points that are for the most part essentially situated diametrically opposite each other.

Preferably, these flanges 9 each have the shape of a square bracket. This shape makes it possible for the flanges not only to be directly connected to the partial annular casings 5 and 12, respectively, but also for them to be directly connected to the support plates 6 and 7 of the drive unit support bottom part or the reinforcing plates 13 and 14, respectively, of the drive unit support top part - generally by means of welding or an integral/single-material connection in the case of an embodiment in the form of a cast component. It is particularly advantageous if at the places in which they protrude outward, the flanges 9 are joined to the partial annular casing and/or to the reinforcing plate(s) or the support plate(s) with the aid of additional - in this case triangular - ribs 18 or reinforcing elements, see Figs. 7 and 9 for example.

The flanges 9 of the drive unit support bottom part and of the drive unit support top part, which flanges come to rest against each other, are preferably screwed to each other.

In this case, the through holes or threaded holes provided for the screw mounting are positioned as shown in Figs. 6 and 9. Each of the flanges can be screwed both in the immediate vicinity of the partial annular casings 5 and 12, and in the immediate vicinity of the support plates 6, 7 and reinforcing plates 13, 14. For this reason, both the middle part of the "square brackets" - as each flange 9 can be described - and each of its legs are preferably provided with a plurality of through holes/threaded holes. Ideally, the through holes or threaded holes are even provided in two rows in the leg of a flange on the side oriented away from the drive pulley.

In this way, both the partial annular casings and preferably also the respective support plate and reinforcing plate can be directly screwed to each other.

It is particularly advantageous if the outer diameter of the tubular section 10 of the drive unit and the inner diameter of the partial annular casings 5 and 12 are matched to each other so that the two partial annular casings 5, 12 can be screwed to each other with the aid of their flanges 9 so that flanges 9 situated opposite each other on the same side, after the tightening of the screws, come to rest against each other "in a block" and then the pressure between the partial annular casings 5, 12 and the tubular section 10 of the drive unit housing is "automatically" great enough - through clasping that is prestressed, so to speak, even in the absence of cable loads - to produce a nonpositive, frictional engagement between the tubular section 10 and the partial annular casings 5 and 12 that is sufficient for an essential or at least predominant torque transmission, without deforming the tubular section 10 in a damaging way.

It should also be noted that a full contact of the tubular section 10 essentially over its entire surface with the inner surfaces of the partial annular casings 5 and 12 also has the advantage that the lost heat of the motor can be better dissipated, namely by virtue of the fact that the lost heat transmitted to the tubular section 10 can be conveyed from it directly to the partial annular casings 5 and 12, which function as heat sinks, so to speak.

### Reference numeral list

- 1: drive unit of the elevator
- 2: drive pulley
- 3: drive unit support bottom part
- 4: drive unit support top part
- 5: partial annular casing of the drive unit support bottom part
- 6: first support plate of the drive unit support bottom part
- 7: second support plate of the drive unit support bottom part
- 8: base plates of the drive unit support bottom part
- 9: flanges of the drive unit support bottom part
- 10: tubular section of the drive unit housing
- 11: holding projections of the drive unit housing
- 12: partial annular casing of the drive unit support top part
- 13: first reinforcing plate of the drive unit support top part
- 14: second reinforcing plate of the drive unit support top part
- 15: brake holder
- 16: plateau
- 17: large bearing plate
- 18: reinforcing rib
- 19: output shaft or motor shaft
- 20: brake
- 21: face of the partial annular casing of the drive unit support top part
- 22: face of the partial annular casing of the drive unit support bottom part
- 23: not assigned
- 24: small bearing plate
- 25: fan
- 26: not assigned
- 27: through holes
- L: drive unit longitudinal axis, simultaneously the rotation axis of the drive pulley
- B: maximum width of the drive unit support
- T: maximum depth of the drive unit support
- R: curvature radius of the partial annular casing
- HO: maximum height of the top part
- HU: maximum height of the bottom part
- W: wall thickness of the partial annular casing
- WF: wall thickness of the base plate
- WR: wall thickness of the tubular section
- WS: wall thickness of the support plates

## Claims

1. An elevator having an elevator drive unit (1) and a drive unit housing, wherein the elevator drive unit (1) is accommodated In the drive unit housing and includes a drive pulley (2), the elevator having a drive unit support for holding the drive unit (1) in a predetermined position, and having at least one hoisting cable, as well as an elevator car guided along guide rails, whereas the drive unit support has a first partial annular casing (3) which embraces the drive unit (1) from underneath and has a holding element embodied as second partial annular casing (4) which embraces the top of the drive unit (1) and secures it to the first partial annular casing (3), whereas the circumference of the drive unit housing is predominantly composed of a tubular section (10) **characterized in that** the outer circumference surface of the tubular section (10) and the inward-facing circumference surfaces (5, 12) of the partial annular casings (3, 4) are matched to each other so that the two partial annular casings (3, 4) each rest with the preponderance of their area against the outer circumference surface of the tubular section (10).

2. The elevator according to claim 1, **characterized in that** the holding element is likewise embodied as a partial annular casing (12).

3. The elevator according to one of claims 1 or 2, **characterized in that** the respective partial annular casing (5, 12) is embodied as essentially rigid.

4. The elevator according to one of the preceding claims, **characterized in that** the respective partial annular casing (5, 12) is thick-walled and is made of steel or cast iron and essentially throughout, has a wall thickness W of ≥ 12 mm and better still ≥ 20 mm.

5. The elevator according to one of the preceding claims, **characterized in that** the respective partial annular casing (5,12) has two laterally protruding flanges (9) with the aid of which the partial annular casing (5, 12) can be connected to another partial annular casing (12, 5) or to the above-mentioned holding element.

6. The elevator according to claim 5, **characterized in that** flanges (9) are provided, which are directly connected to both the respective partial annular casing (5, 12) and the support plate(s) of the drive unit support bottom part or the reinforcing plate(s) of the drive unit support bottom part, and each of the flanges preferably has a shape that corresponds to that of a square bracket.

7. The elevator according to one of the preceding claims, **characterized in that** the partial annular casing (5) and the holding element or the plurality of partial annular casings (5, 12) are clamped against the circumference of the drive unit (1) enclosed by them so that a non-positive, frictional engagement is produced, which transmits a significant part or preferably the preponderance of the torque produced during operation from the drive unit to the drive unit support.

8. The elevator according to one of the preceding claims, **characterized in that** the drive unit (1) is embodied as "gearless".

9. The elevator according to one of the preceding claims, **characterized in that** the drive unit (1) has a housing whose circumference surface preferably predominantly constitutes a tube section (10) that is intrinsically closed in the circumference direction and whose outer contour is complementary to the inner contour of the partial annular casings (5, 12) and the tubular section (10) is preferably embodied as smooth-surfaced throughout.

10. The elevator according to claim 7, **characterized in that** the tubular section (10) is thick-walled, preferably such that the wall thickness WR ≥ 10 mm, and the tubular section (10) is ideally composed of steel or cast iron.

11. The elevator according to claim 9 or 10, **characterized in that** the tubular section (10) itself has at least one hole into which is inserted a machine.element that protrudes into the partial annular casing, which element constitutes a means for preventing rotation.

12. The elevator according to one of claims 9 through 11, **characterized in that** the tubular section (10) is embodied as entirely smooth-surfaced on the outside and preferably is embodied with a circular cylindrical surface on the outside.

13. The elevator according to one of claims 9 through 12, **characterized in that** the tubular section (10) is rimmed on at least one end and preferably on both ends with a holding projection (11) that protrudes radially outward.

14. The elevator according to one of claims 9 through 13, **characterized in that** at least the holding projection (11) can be affixed directly to the drive unit support; preferably, the holding projection is provided with one or more through holes that each accommodate a respective screw with which the holding projection is screwed to the drive unit support.

15. The elevator according to one of claims 9 through 14, **characterized in that** the holding projection(s) (11) have the form of an annular flange that is at least essentially and preferably completely closed in the circumference direction.

16. A drive unit having a drive pulley affixed to the drive shaft for installation in an elevator according to one of the preceding claims, **characterized in that** the circumference of the drive unit is predominantly - preferably by more than 70% - made up of a pipe that has a smooth-surfaced and circular outer circumference.

## Patentansprüche

1. Aufzug mit einem Aufzugsantrieb (1) und einem Antriebsgehäuse, wobei der Aufzugsantrieb in dem Antriebsgehäuse untergebracht ist und eine Treibscheibe (2) umfasst, wobei der Aufzug einen Antriebsträger zum Halten des Antriebs in einer vorgegebenen Position umfasst und mindestens ein Seil, sowie einen Fahrkorb, der entlang von Führungsschienen geführt wird, wobei der Antriebsträger eine erste Teilring-Schale (3) besitzt, die den Antrieb von unten her umgreift und ein Halteelement, das als zweite Teilring-Schale (4) ausgebildet ist, die die Oberseite des Aufzugs Antriebs umfasst und diesen gegenüber der ersten Teilring-Schale (3) sichert, wobei der Umfang des Antriebsgehäuses überwiegend aus einem rohrförmigen Abschnitt (10) besteht, **dadurch gekennzeichnet, dass** die Außenumfangsfläche des rohrförmigen Abschnitts (10) und die einwärtige Umfangsoberfläche (5, 10) der Teilring-Schalen (3, 4) aufeinander abgestimmt sind, sodass die beiden Teilring-Schalen (3, 4) mit dem überwiegenden Teil ihrer Fläche gegen die Außenumfangsfläche des rohrförmigen Abschnitts (10) anliegen.

2. Aufzug nach Anspruch 1, **dadurch gekennzeichnet, dass** das Halteorgan ebenfalls als Teilring-Schale (12) ausgebildet ist.

3. Aufzug nach einem der Ansprüche 1 oder 2, **dadurch gekennzeichnet, dass** die jeweilige Teilring-Schale (5, 12) im Wesentlichen biegesteif ausgeführt ist.

4. Aufzug nach einem der vorhergehenden Ansprüche, **dadurch gekennzeichnet, dass** die jeweilige Teilring-Schale (5, 12) dickwandig aus Stahl oder Gusseisen ausgeführt ist und im Wesentlichen durchgängig eine Wandstärke W von ≥ 12 mm und besser noch von ≥ 20 mm besitzt.

5. Aufzug nach einem der vorhergehenden Ansprüche, **dadurch gekennzeichnet, dass** die jeweilige Teilring-Schale (5, 12) zwei seitlich abstehende Flansche (9) besitzt mit deren Hilfe die Teilringschale (5, 12) mit einer anderen Teilringschale (12, 5) oder mit dem vorgenannten Halteorgan verbunden werden kann.

6. Aufzug nach Anspruch 5, **dadurch gekennzeichnet, dass** Flansche (9) vorhanden sind, die sowohl unmittelbar mit der jeweiligen Teilring-Schale (5, 12) verbunden sind als auch mit der oder den Stützplatte(n) des Antriebsträgerunterteils oder mit der oder den Versteifungsplatte(n) des Antriebsträgerunterteils, wobei jeder der Flansche vorzugsweise eine Gestalt besitzt, die der einer eckigen Klammer entspricht.

7. Aufzug nach einem der vorhergehenden Ansprüche, **dadurch gekennzeichnet, dass** die Teilring-Schale (5) und das Haltemittel bzw. die mehreren Teilring-Schalen (5, 12) so gegen den Mantel des von ihnen umgriffenen Antriebs (1) verspannt sind, dass Reibschluss entsteht, der einen wesentlichen oder vorzugsweise überwiegenden Teil des im Betrieb entstehenden Drehmoments vom Antrieb auf den Antriebsträger überträgt.

8. Aufzug nach einem der vorhergehenden Ansprüche, **dadurch gekennzeichnet, dass** der Antrieb (1) "gearless" ausgeführt ist.

9. Aufzug nach einem der vorhergehenden Ansprüche, **dadurch gekennzeichnet, dass** der Antrieb (1) ein Gehäuse besitzt, dessen Mantelfläche vorzugsweise zu einem überwiegenden Teil einen in Umfangsrichtung in sich geschlossenen Rohrabschnitt (10) ausbildet, dessen Außenkontur komplementär zur Innenkontur der Teilringschale (5, 12) ausgebildet ist, wobei der Rohrabschnitt (10) vorzugsweise durchgehend glattflächig ausgebildet ist.

10. Aufzug nach Anspruch 7, **dadurch gekennzeichnet, dass** der Rohrabschnitt (10) dickwandig ist, vorzugsweise derart, dass die Wandstärke WR ≥ 10 mm beträgt, wobei der Rohrabschnitt (10) idealerweise aus Stahl oder Gusseisen besteht.

11. Aufzug nach Anspruch 9 oder 10, **dadurch gekennzeichnet, dass** der Rohrabschnitt (10) selbst mindestens ein Loch trägt, in das ein in die Teilring-Schale hineinragendes Maschinenelement eingebracht ist, das eine Verdrehsicherung bildet.

12. Aufzug nach einem der Ansprüche 9 bis 11, **dadurch gekennzeichnet, dass** der Rohrabschnitt (10) außenseitig vollständig glattflächig und außenseitig vorzugsweise mit einer kreiszylindrischen Oberfläche ausgeführt ist.

13. Aufzug nach einem der Ansprüche 9 bis 12, **dadurch gekennzeichnet, dass** der Rohrabschnitt (10) mindestens an einem Ende und vorzugsweise an beiden Enden durch einen radial nach außen ragenden Haltevorsprung (11) berandet wird.

14. Aufzug nach einem der Ansprüche 9 bis 13, **dadurch gekennzeichnet, dass** mindestens der Haltevorsprung (11) unmittelbar an dem Antriebsträger festgesetzt werden kann, wobei er zu diesem Zweck vorzugsweise mit einem oder mehreren Durchstecklöchern versehen ist, die jeweils eine Schraube aufnehmen, mit der der Haltevorsprung mit dem Antriebsträger verschraubt wird.

15. Aufzug nach einem der Ansprüche 9 bis 14, **dadurch gekennzeichnet, dass** der oder die Haltevorsprünge (11) die Gestalt eines in Umfangsrichtung zumindest im Wesentlichen und vorzugsweise vollständig durchgehenden Ringflansches besitzen.

16. Antrieb mit einer auf der Antriebswelle festgesetzten Treibscheibe zum Einbau in einen Aufzug nach einem der vorhergehenden Ansprüche, **dadurch gekennzeichnet, dass** der Mantel des Antriebs überwiegend, vorzugsweise zu mehr als 70% durch ein an seinem Außenumfang glattflächigkreisrundes Rohr gebildet wird.

## Revendications

1. Ascenseur ayant une unité d'entraînement d'ascenseur (1) et un boîtier d'unité d'entraînement, dans lequel l'unité d'entraînement d'ascenseur (1) est abritée dans le boîtier d'unité d'entraînement et inclut une poulie motrice (2), d'ascenseur ayant un support d'unité d'entraînement pour maintenir l'unité d'entraînement (1) dans une position prédéterminée, et ayant au moins un câble de levage, ainsi qu'un chariot d'ascenseur guidé le long de rails de guidage, tandis que le support d'unité d'entraînement comprend un premier carter annulaire partiel (3) qui entoure l'unité d'entraînement (1) depuis le dessous et qui comprend un élément de maintien incorporé sous la forme d'un second carter annulaire partiel (4) qui entoure le sommet de l'unité d'entraînement (1) et qui la fixe sur le premier carter annulaire partiel (3), tandis que la circonférence du boîtier d'unité d'entraînement est composée de façon prédominante d'un tronçon tubulaire (10), **caractérisé en ce que** la surface circonférentielle extérieure du tronçon tubulaire (10) et les surfaces circonférentielles (5, 12) tournées vers l'intérieur des carters annulaires partiels (3, 4) sont appariées l'une à l'autre de telle façon que les deux carters annulaires partiels (3, 4) reposent chacun avec la majeure partie de leur surface contre la surface circonférentielle extérieure du tronçon tubulaire (10).

2. Ascenseur selon la revendication 1, **caractérisé en ce que** l'élément de maintien est réalisé, de façon similaire, sous forme d'un carter annulaire partiel (12).

3. Ascenseur selon l'une des revendications 1 ou 2, **caractérisé en ce que** le carter annulaire partiel (5, 12) respectif est réalisé sous forme d'un corps essentiellement rigide.

4. Ascenseur selon l'une des revendications précédentes, **caractérisé en ce que** le carter annulaire partiel (5, 12) respectif est à paroi épaisse et est réalisé en acier ou en fonte de fer et présente sensiblement sur toute son étendue une épaisseur de paroi W ≥ 12 mm et encore mieux 20 mm.

5. Ascenseur selon l'une des revendications précédentes, **caractérisé en ce que** le carter annulaire partiel (5, 12) respectif possède deux brides en projection latérale (9) à l'aide desquelles le carter annulaire partiel (5, 12) peut être connecté à un autre carter annulaire partiel (12, 5) ou à l'élément de maintien mentionné ci-dessus.

6. Ascenseur selon la revendication 5, **caractérisé en ce qu'**il est prévu des brides (9) qui sont directement connectées à la fois au carter annulaire partiel (5, 12) respectif et à la plaque ou aux plaques de support de la partie inférieure du support d'unité d'entraînement ou encore à la plaque ou aux plaques de renforcement de la partie inférieure du support d'unité d'entraînement, et chacune des brides a de préférence une forme qui correspond à celle d'une monture carrée.

7. Ascenseur selon l'une des revendications précédentes, **caractérisé en ce que** le carter annulaire partiel (5) et l'élément de maintien ou la pluralité de carters annulaires partiels (5, 12) sont serrés contre la circonférence de l'unité d'entraînement (1) qui les entoure de telle façon qu'il se produit un engagement par friction non positif, qui transmet une partie significative ou de préférence la majeure partie du couple produit pendant le fonctionnement depuis l'unité d'entraînement vers le support d'unité d'entraînement.

8. Ascenseur selon l'une des revendications précédentes, **caractérisé en ce que** l'unité d'entraînement (1) est réalisée sous forme dépourvue d'engrenages.

9. Ascenseur selon l'une des revendications précédentes, **caractérisé en ce que** l'unité d'entraînement (1) comprend un boîtier dont la surface circonférentielle constitue de préférence en majeure partie un tronçon de tube (10) qui est intrinsèquement fermé dans la direction circonférentielle et dont le contour extérieur est complémentaire du contour intérieur des carters annulaire partiels (5, 12) et le tronçon tubulaire (10) est de préférence réalisé en totalité avec une surface lisse.

10. Ascenseur selon la revendication 7, **caractérisé en ce que** le tronçon tubulaire (10) et à paroi épaisse, de préférence de telle façon que l'épaisseur de paroi W ≥ 10 mm, et le tronçon tubulaire (10) est composé de façon idéale d'acier ou de fonte de fer.

11. Ascenseur selon la revendication 9 ou 10, **caractérisé en ce que** le tronçon tubulaire (10) lui-même comporte au moins un trou dans lequel est inséré un élément de machine qui se projette jusque dans le carter annulaire partiel, ledit élément constituant un moyen pour empêcher une rotation.

12. Ascenseur selon l'une des revendications 9 à 11, **caractérisé en ce que** le tronçon tubulaire (10) est réalisé avec une surface entièrement lisse sur l'extérieur et de préférence réalisé avec une surface cylindrique circulaire sur l'extérieur.

13. Ascenseur selon l'une des revendications 9 à 12, **caractérisé en ce que** le tronçon tubulaire (10) comporte une bordure sur au moins une extrémité et de préférence sur les deux extrémités, avec une projection de maintien (11) qui se projette radialement vers l'extérieur.

14. Ascenseur selon l'une des revendications 9 à 13, **caractérisé en ce qu'**au moins la projection de maintien (11) peut être fixée directement sur le support d'unité d'entraînement ; de préférence la projection de maintien est dotée d'un ou plusieurs trous traversants qui abritent chacun une vis respective avec laquelle la projection de maintien est vissée sur le support d'unité d'entraînement.

15. Ascenseur selon l'une des revendications 9 à 14, **caractérisé en ce que** la ou les projection(s) de maintien (11) a/ont la forme d'une bride annulaire qui est au moins essentiellement et de préférence complètement fermée dans la direction circonférentielle.

16. Unité d'entraînement ayant une poulie d'entraînement fixée sur l'arbre d'entraînement, destinée à être installée dans un ascenseur selon l'une des revendications précédentes, **caractérisée en ce que** la circonférence de l'unité d'entraînement est, de manière prédominante et de préférence sur plus de 70 %, réalisée d'un tube qui présente une surface lisse et une circonférence extérieure circulaire.
